(19) **Europäisches Patentamt / European Patent Office / Office européen des brevets**

(11) **EP 1 288 051 B1**

(12) **EUROPEAN PATENT SPECIFICATION**

(45) Date of publication and mention
of the grant of the patent:
**15.06.2011 Bulletin 2011/24**

(51) Int Cl.:
*B60W 10/06* *(2006.01)* *B60W 10/26* *(2006.01)*
*F02D 41/04* *(2006.01)* *B60K 6/445* *(2007.10)*

(21) Application number: **02019375.1**

(22) Date of filing: **29.08.2002**

(54) **Control apparatus and method of diesel hybrid vehicle**

Steuerungsverfahren und -vorrichtung eines Diesel-Hybridfahrzeugs

Système de régulation pour un véhicule hybride à moteur diesel

(84) Designated Contracting States:
**DE FR IT**

(30) Priority: **30.08.2001 JP 2001260661**

(43) Date of publication of application:
**05.03.2003 Bulletin 2003/10**

(73) Proprietor: **Toyota Jidosha Kabushiki Kaisha
Toyota-shi, Aichi-ken, 471-8571 (JP)**

(72) Inventors:
• **Igarashi, Kohei
Toyota-shi,
Aichi-ken, 471-8571 (JP)**
• **Murata, Hiroki
Toyota-shi,
Aichi-ken, 471-8571 (JP)**
• **Sasaki, Shizuo
Toyota-shi,
Aichi-ken, 471-8571 (JP)**

(74) Representative: **TBK
Bavariaring 4-6
80336 München (DE)**

(56) References cited:
DE-A- 4 344 053    US-A- 5 343 970
US-A- 6 164 400    US-B1- 6 301 529

**Description**

Background of the invention

1. Field of the Invention

The invention relates to control of a diesel hybrid vehicle and more particularly to control of a diesel hybrid vehicle equipped with a diesel engine, a motor/generator and an electric energy storage device.

2. Description of Related Art

Document US 6,164,400 A describes subject matter corresponding to the preamble of independent claims 1 and 21. It discloses a hybrid power train controller for a hybrid vehicle, wherein the vehicle comprises a diesel engine and a motor/generator. The power train controller schedules fuel delivered to the diesel engine by a control strategy, by which drivability of the vehicle is maintained while an improved fuel efficiency and low exhaust gas emissions are achieved.
Document US 5,343,970 A describes a hybrid electric vehicle, in which also the fuel efficiency is to be improved. It is described that the hybrid vehicle may include a gasoline engine and a motor, but also other kinds of fuels such as diesel fuel, methanol etc. are mentioned.
Document DE 43 44 053 A1 discloses a method of controlling a hybrid vehicle which comprises an internal combustion engine and an electrical motor. In driving phases, in which a fuel consumption of the engine is high, the engine is loaded with the motor such that a battery can be charged.
Document US 6,301,529 B1 discloses a driving apparatus and method for a hybrid vehicle, by which a power generation request quantity is calculated based on the SOC (state of charge) of a battery.
Recently, various kinds of hybrid vehicles have been proposed in order to obtain a driving force required for the vehicles from an output of an on-load motor when necessary, by operating an internal combustion engine under a condition ensuring as high an efficiency as possible in consideration of earth environment protection and natural resource saving. These hybrid vehicles are classified into two types, that is, series hybrid and parallel hybrid. Further, the latter can be roughly divided into one-motor assist type and two-motor power distribution type. As the power distribution type vehicles, electric distribution type vehicles using two rotor motors and mechanical distribution type vehicles using a planetary gear are well known. In the series hybrid type vehicle, a generator is operated so as to generate electric power, generated electric power is accumulated in a battery and a driving motor is driven to meet a requirement for the vehicle. Therefore, in such a structure, the operation of the internal combustion engine can be separated from the requirement for the vehicle. On the contrary, in the assist type hybrid vehicle and parallel hybrid type vehicle, the internal combustion engine is operated within a certain operating range to meet the requirement for the vehicle.
The requirement for the vehicle mentioned here includes not only energy necessary for travelling the vehicle (usually, determined from the depressing amount of an accelerator pedal and revolution number) but also energy necessary for operating auxiliary machinery such as an air conditioner. Further, in the case of a vehicle equipped with the battery, charging/discharging energy to and from this battery needs to be regarded as a requirement for the vehicle. The hybrid vehicle needs to be capable of bringing out electric power or needs to be charged with some amount of electric power for the case where the requirement for the vehicle is increased. In addition, the hybrid vehicle needs to be capable of being recharged for the case where regeneration occurs successively on a downward slope or the like. Because of both the requirements, the charging state of the battery is controlled to be a certain target state or to be within a certain target range. Thus, if the residual capacity of the battery drops, the output of the internal combustion engine is increased to generate electric power and then charge the battery. On the other hand, if the residual capacity is too high, the internal combustion engine is stopped or the output of the internal combustion engine is decreased so as to discharge the battery.
However, even though such a hybrid vehicle is constructed with the purpose of raising the efficiency of the internal combustion engine, control to decrease the efficiency may be performed depending on some cases. This problem is more apparent in the case of the diesel engine in which the highest efficient operating range exists on a smaller output side than in the case of the gasoline engine. The reason is that if it is determined that the residual capacity of the battery is insufficient and the output of the diesel engine is increased to bring out electric power for charging, there likely occurs such a phenomenon that the operating state may be away from the highest efficient point.

**SUMMARY OF THE INVENTION**

The object of the invention is to achieve control for operating a diesel engine in a diesel hybrid vehicle as efficient as possible.
According to a first aspect of the invention, there is provided a control apparatus of a diesel hybrid vehicle having a diesel engine, motors for generating a driving force in addition to the diesel engine, and an electric energy storage device acting as an electric power supplying source to the motors. This control apparatus includes correction amount computing means for determining a correction amount relative to the output of the diesel engine based on the state of the battery and correcting means for correcting the output of the diesel engine by modifying the correction amount toward the side in which the operating efficiency of the diesel engine is increased according to the relation between the operating state and the operating efficiency of the diesel engine.

According to a second aspect of the invention, there is provided a control method of a diesel hybrid vehicle including a diesel engine, motors for generating a driving force in addition to the diesel engine, and an electric energy storage device acting as an electric power supply source to the motors. This control method includes steps of determining a correction amount relative to the output of the diesel engine based on the state of the electric energy storage device and modifying the correction amount toward the side in which the operating efficiency of the diesel engine is increased according to the relation between the operating state and operating efficiency of the diesel engine so as to correct the output of the diesel engine.

According to such a control of the diesel hybrid vehicle, basically, a correction amount relative to the output of the diesel engine is determined based on the state of the electric energy storage device, for example, the battery (hereinafter, a case where the battery is used as an electric energy storage device will be described). This correction amount is modified toward the side in which the operating efficiency of the diesel engine is increased, according to the relation between the operating state and operating efficiency of the diesel engine. The diesel engine is operated using this corrected correction amount. Therefore, the operation can be achieved in an operating range ensuring higher efficiency than in the case where the diesel engine is operated simply according to the state of the battery.

The configuration may be such that a second required amount relative to the output of the diesel engine is determined by modifying a first required amount relative to the diesel engine based on a correction amount prior to the modification, according to the modified correction amount, and then the diesel engine is operated so as to produce an output of the diesel engine depending upon the second required amount.

According to the control apparatus and control method of the diesel hybrid vehicle, if a first correction for correcting the output of the diesel engine depending upon a correction amount based on the state of the electric energy storage device and a second correction for correcting the output of the diesel engine based on the relation between the operating state and operating efficiency increase/decrease the output of the diesel engine in the same direction, the correction amount may be modified. If the both corrections increase/decrease the output of the diesel engine in the directions opposite to each other, the operating means may operate the diesel engine based on the first required amount.

Because a requirement for correction to maintain the state of the battery in an appropriate state is considered to have a high precedence, it is secured. The configuration for modifying the correction amount so as to improve the efficiency on a next stage is a realistic means. Consequently, both a requirement of operating the diesel engine in an operating range as efficient as possible and a requirement of controlling the residual capacity of the battery appropriately can be satisfied at the same time. In the meantime, the modification of the correction amount may be performed not only by summing up just the correction amount or modification coefficient, but also by multiplying, accumulating or referring to a map in the accumulation direction.

According to the above-described configuration, if the first correction and the second correction produce results in the directions opposite to each other, the modification of the correction amount is not performed. However, if the precedence of an efficient operation of the diesel engine is set higher than a requirement of maintaining the battery in an appropriate state, even when the correction of the output of the diesel engine based on the condition of the battery and the correction of the output of the diesel engine based on the relation between the operating state and operating efficiency of the diesel engine increase/decrease the output of the diesel engine in the directions opposite to each other, it is possible to give precedence to the efficiency of the diesel engine and to modify the correction amount such that the correction amount decreases. Alternatively, it is possible to adopt such a configuration which limits the precedence of charging the battery without giving the highest precedence to the charging of the battery and gives precedence to the operating efficiency of the diesel engine in that range.

This correction can be easily executed by previously memorizing a modification coefficient relative to a correction amount, determining whether or not multiplying with the modification coefficient is necessary based on the sign of the correction amount and the relation between the first required amount and operating efficiency, and then multiplying the correction amount with the modification coefficient so as to perform modification, based on a determination result. If the modification coefficient is set to the value 1 in the case where no modification is executed, the correction amount can be modified easily by multiplying. The determination is made based on the correction amount and operating state of the diesel engine in order to determine whether or not the operating state of the diesel engine can be placed in a high operating state.

The modification coefficient in such a modification is set as a reference value when the operating efficiency of the diesel engine is in the highest range. The modification coefficient can be set to a larger value as the operating efficiency becomes further from that highest range. As a result, if the operating efficiency is far from the highest range to a large extent, the correction amount can be modified to a large extent such that the operating efficiency becomes as near to the highest range as possible.

By modifying the correction amount of the output of the diesel engine based on the charging/discharging amount of the battery, the correction amount (output) of the output of the diesel engine can be computed based on that modified correction amount. This is because, although the output of the diesel engine may be corrected directly, it can be corrected by modifying the correction amount of the output of the diesel engine based on the charging/discharging amount of the battery.

## BRIEF DESCRITPION OF THE DRAWINGS

The foregoing and further objects, features and advantages of the invention will become apparent from the following description of preferred embodiments with reference to the accompanying drawings, wherein like numerals are used to represent like elements and wherein:

Fig. 1 is a schematic structure diagram of a control apparatus of a diesel hybrid vehicle according to an embodiment of the present invention;
Fig. 2 is an explanatory diagram showing the driving system of the embodiment;
Fig. 3 is a graph showing the relation between operating state and efficiency of the diesel engine;
Fig. 4 is a flow chart showing the outline of operation control processing according to the first embodiment;
Fig. 5 is an explanatory diagram showing an example of map for setting a correction amount Ph based on the state of charge (SOC) of a battery;
Fig. 6 is an explanatory diagram showing an example of map for setting a modification coefficient $\alpha$ based on an output range of the diesel engine;
Fig. 7 is a flow chart showing the outline of operation control processing according to the second embodiment;
Fig. 8 is an explanatory diagram showing changes in SOC of the battery under the second embodiment; and
Fig. 9 is an explanatory diagram showing an example of the structure of other hybrid vehicle.

## DETAILED DESCRITPION OF THE PREFERRED EHBOEDIMENTS

Generally, an output Pe required of an engine can be defined as a sum of an output Pd necessary for driving a vehicle, an output P$\alpha$ necessary for operating an auxiliary machinery and an output Ph necessary for charging/ discharging a battery, that is, as indicated in a following equation (1). Pe = Pd + P$\alpha$ + Ph (1)

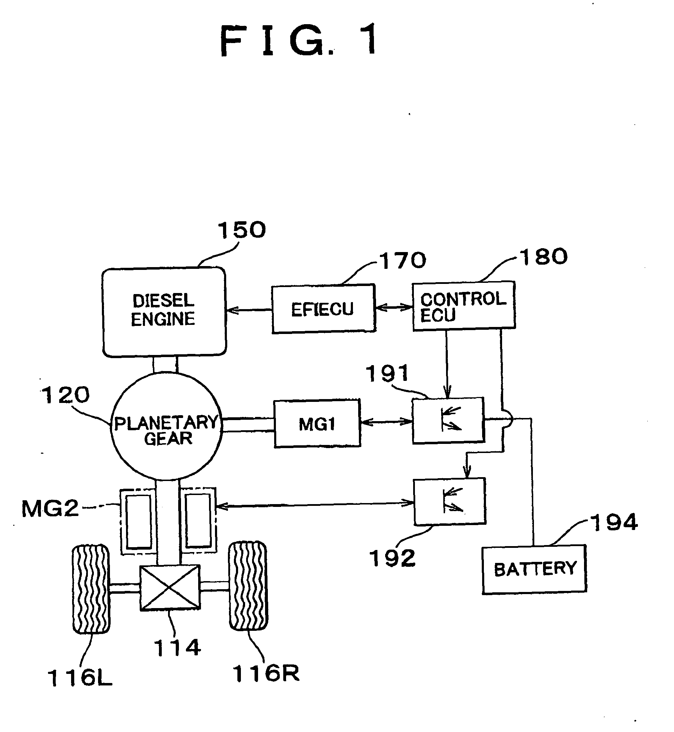

Although the output Pe required of the engine specified in this way can be corrected directly, this output of the engine may be corrected indirectly by correcting the output Ph necessary for charging/discharging the battery. With regard to the charging/discharging of the battery, in the case of the charging of the battery, a load is applied upon the engine because the charging occurs as a result of regeneration of electric power with a motor (Ph>0). On the other hand, in the case of the discharging of the battery, the load on the engine is reduced (Ph<0) because torque assist is performed from the motor. By correcting this, the output of the diesel engine can be corrected consequently. Naturally, the output of the engine can be corrected by correcting any one of the right side of the equation (1). Although the word "output" is used here to express a meaning of instantaneous torque $\times$ revolution number, it is energy brought out from the diesel engine 150 that is actually adjusted by controlling fuel injection amount relative to the diesel engine 150 (see Fig. 1). Thus, these(Pe, Pd, P$\alpha$, Ph) are described as output or energy Pe or the like depending on the necessity in a description below.

The embodiments of the invention will be described about following classified items.

A. Entire structure of the hybrid vehicle and structure of a diesel engine and its surrounding portion
B. Basic operation of the hybrid vehicle
C. Control of the first embodiment
D. Control of the second embodiment
E. Other modifications

A. Entire structure of the hybrid vehicle and structure of a diesel engine and its surrounding portion

Fig. 1 is an explanatory diagram showing schematically the entire structure of a hybrid vehicle according to a first embodiment of the invention. This hybrid vehicle has a diesel engine 150 and two motor/generator MG1, MG2. These are prime movers which can be a driving force source for a driving shaft. The "motor/generator" mentioned here means a prime mover which acts as a generator as well as a motor. Hereinafter, this will be called simply "a motor" for convenience of explanation. The diesel engine 150 and the motors MG1, MG2 are each connected to three axes of the planetary gear 120 so that a power can be exchanged between the both. Because the driving shaft connected to the motor MG2 is connected to right and left driven wheels 116L, 116R through a differential gear 114, any one of the diesel engine 150 and the motors MG1, MG2 can be a driving force source for driving these driven wheels 116L, 116R. The power output style will be described later.

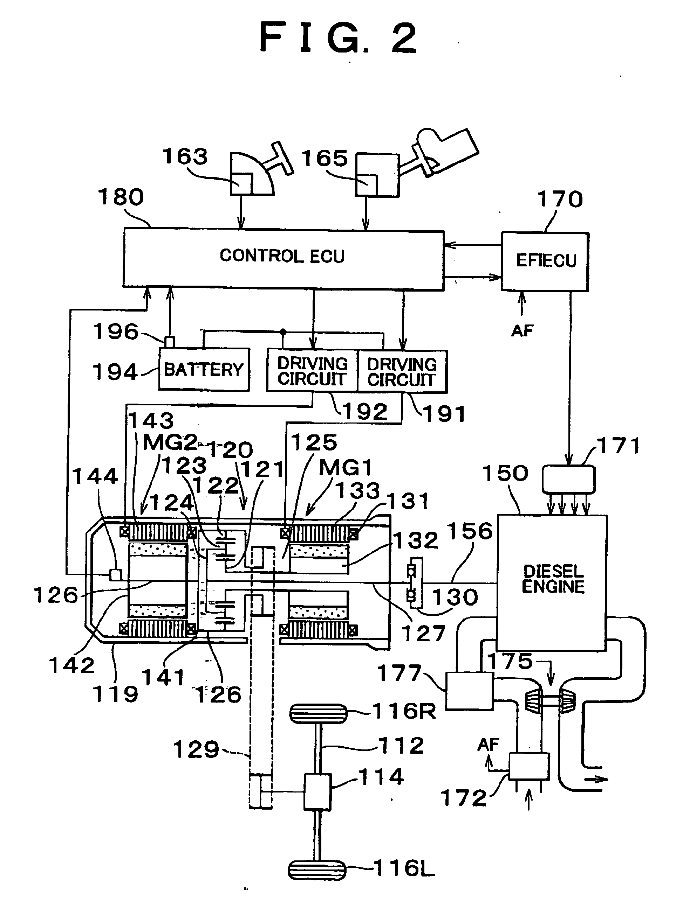

The diesel engine 150 is controlled by an EFIECU 170 which controls fuel injection amount by controlling a common rail type fuel injection pump 171 (see Fig. 2). The motors MG1, MG2 are controlled by a control ECU 180 through driving circuits 191, 192. The EFIECU 170 always exchanges necessary data with the control ECU 180. Electric energy for driving the motors MG1, MG2 is supplied from the battery 194. This battery 194 is a secondary battery which can be charged/discharged. In the regeneration mode in which the motors MG1, MG2 are operated as generators, this battery can be charged from surplus electric power.

The vehicle shown in Fig. 1 can be traveled by the diesel engine 150 and/or by the motors MG1, MG2. Next, the detailed structure of the diesel hybrid vehicle of this embodiment will be described together with the charge/discharge control of the battery 194. Fig. 2 is an explanatory diagram showing the relation between the planetary gear 120 of the diesel hybrid vehicle and the motors MG1, MG2 of this embodiment.

The motors MG1, MG2 are constructed as synchronous motors, and have rotors 132, 142 each including a plurality of permanent magnets on its outer peripheral face and stators 133, 143 around which three-phase coils 131, 141 for forming a rotary magnetic field are wound. The stators 133, 143 are fixed to a case 119. The three-face coils 131, 141 wound around the stators 133, 143 of the motors MG1, MG2 are connected to a secondary battery 194 through the driving circuits 191, 192. The driving circuits 191, 192 are transistor inverters having a transistor acting as a switching element provided on each of its source side and sink side for each phase. The driving circuits 191, 192 are connected to the control ECU 180. If the transistors of the driving circuits 191, 192 are switched by a control signal from the control ECU 180, current flows between the battery 194 and the motors MG1/MG2. The motors MG1, MG2 can operate as motors which are rotated by receiving electric power from the battery 194 (hereinafter, this operating state is called power running). When the rotors 132, 142 are rotated by an external force, they can function as generators which generate electromotive force on both ends of the three-phase coils 131, 141 so as to charge the battery 194 (hereinafter this operating state is called regeneration).

The engine 150 is mechanically coupled with the rotation shafts of the motors MG1, MG2 through the planetary gear 120. The planetary gear 120 includes a sun gear 121, a ring gear 122, and a planetary carrier having a planetary pinion gear 123. In the diesel hybrid vehicle of this embodiment, a crank shaft 156 of the engine 150 is coupled with a planetary carrier shaft 127 through a damper 130. The damper 130 is provided to absorb twisting vibration generated in the crank shaft 156. The rotor 132 of the motor MG1 is coupled with a sun gear shaft 125. A rotor 142 of the motor MG2 is coupled with a ring gear shaft 126. A rotation of the ring gear 122 is transmitted to a wheel shaft 112 and the driven wheels 116R, 116L through a chain belt 129 and a differential gear 114.

The control ECU 180 employs various kinds of sensors for realizing control on the entire vehicle and is connected to, for example, an accelerator sensor 165 for detecting a depressing amount of the accelerator pedal by a driver, a brake sensor 163 for detecting a depressing pressure of the brake, a battery sensor 196 for detecting the state of charge (SOC) of the battery 194, a revolution number sensor 144 for measuring a revolution number of the motor MG2 and the like. Because the ring gear shaft 126 and the wheel shaft 112 are mechanically coupled with each other through the chain belt 129, the ratio in the revolution number between the ring gear shaft 126 and the wheel shaft 112 is constant. Therefore, not only the revolution number of the motor MG2 but also the revolution number of the wheel shaft 112 i.e., the velocity of the vehicle can be detected by the revolution number sensor 144 provided on the ring gear shaft 126.

The EFIECU 170 for controlling the operation of the diesel engine 150 is also connected to various kinds of sensors and actuators. The sensors includes an air flow meter (AFM) 172 for measuring a suction air flow amount (AF), a cooling water temperature sensor (not shown), a catalyst temperature sensor and the like. The actuators include a common rail type fuel injection pump 171, a gate valve (not shown) for controlling the turbo charger 175 and the like. The turbo charger 175 pressure-charges suction air by using the force of exhaust gas as required. Additionally, an intercooler 177 for cooling pressure-charged suction air is also provided.

B. Basic operation of the hybrid vehicle

Prior to description of the basic operation of the hybrid vehicle, first, the operation of the planetary gear 120 will be described simply. The planetary gear 120 has such a feature that if the revolution numbers of two rotation shafts of the aforementioned three rotation shafts are determined, the revolution number of a remaining rotation shaft is automatically determined. The relation among the respective revolution number of rotation shafts is expressed with a following equation (1).

$$Nc = Ns \times \rho/(1 + \rho) + Nr \times 1/(1 + \rho) \qquad (1)$$

In this equation, Nc is the revolution number of the planetary carrier shaft 127, Ns is the revolution number of the sun gear shaft 125 and Nr is the revolution number of the ring gear shaft 126. ρ is the gear ratio between the sun gear 121 and the ring gear 122 as indicated by a following equation.

$$\rho= \text{[number of teeth of the sun gear 121]}/\text{[number of teeth}$$
$$\text{of the ring gear 122]}$$

The torque of three rotation shafts has a constant relation provided by following equations (2), (3) regardless of the revolution number.

$$Ts = Tc \times \rho/(1 + \rho) \qquad (2)$$

$$Tr = Tc \times 1/(1 + \rho) = Ts/\rho \qquad (3)$$

In these equations, Tc is the torque of the planetary carrier shaft 127, Ts is the torque of the sun gear 125 and Tr is the torque of the ring gear shaft 126.

The hybrid vehicle of this embodiment can travel in various kinds of states due to the function of the planetary gear 120. For example, when the hybrid vehicle starts to run in a relatively low velocity state, a power is transmitted to the wheel shaft 112 by powering the motor MG2 with the diesel engine 150 stopped. The vehicle can travel also with the diesel engine 150 idled.

When the velocity of the hybrid vehicle reaches a predetermined velocity after it starts to travel, the control ECU 180 powers the motor MG1, so that the diesel engine 150 is started up by motoring using the torque of this motor MC1. Although at this time, the counterforce torque of the motor MG1 is output to the ring gear 122 through the planetary gear 120, this is absorbed by controlling the motor MG2.

If the planetary carrier shaft 127 is rotated by operating the diesel engine 150, the sun gear 125 and the ring gear shaft 126 are rotated under the condition satisfying the above equations (1) to (3). A power by the rotation of the ring gear 126 is transmitted to the driven wheels 116R, 116L. The power by the rotation of the sun gear 125 can be regenerated as electric power by the first motor MG1. On the other hand, if the second motor MG2 is powered, the power can be output to the driven wheels 116R, 116L through the ring gear shaft 126.

Upon regular operation, the output of the diesel engine 150 is set to substantially the same value as a required driving force (that is, revolution number of the wheel shaft 112 × torque) of the wheel shaft 112. At this time, part of the output of the diesel engine 150 is transmitted directly to the wheel shaft 112 through the ring gear 126 while a remaining output is regenerated as electric power by the first motor MG1. The regenerated electric power is used to generate a desired torque for the second motor MG2 to rotate the ring gear shaft 126. As a result, the vehicle shaft 112 can be driven at a desired torque with a desired revolution number. This operation with the planetary gear 120 and the two motors MG1, MG2 is called torque conversion.

If the torque transmitted to the wheel shaft 112 is insufficient, the torque is assisted by the second motor MG2. As electric power for this assistance, electric power regenerated by the first motor MG1 and electric power accumulated in the battery 194 are used. The control ECU 180 controls the operation of the two motors MG1, MG2 corresponding to a desired driving force which should be output from the wheel shaft 112.

The hybrid vehicle of this embodiment can travel backward while operating the diesel engine 150. If the diesel engine 150 is operated, the planetary carrier shaft 127 is rotated in the same direction as when it travels forward. If the sun gear shaft 125 is rotated at a higher revolution number than the revolution number of the planetary carrier shaft 127 by controlling the first motor MG1, the ring gear shaft 126 is rotated in the direction of backward traveling as evident from the above equation (1). The control ECU 180 controls the output torque while rotating the second motor MG2 in the direction of backward traveling so as to drive the hybrid vehicle backward.

The planetary gear 120 can rotate the planetary gear 124 and the sun gear 121 with the ring gear 122 stopped. Thus, the diesel engine 150 can be operated even if the vehicle remains stopped. For example, if the residual capacity of the battery 194 is insufficient, the diesel engine 150 is operated to regenerate the first motor MG1, so that the battery 194 is charged. If the first motor MG1 is powered when the vehicle remains stopped, the diesel engine 150 can be started by motoring using the torque generated at that time.

Owing to the operation of the control ECU 180 described above, the EFIECU 170 receives a command from the control ECU 180 and controls the operating state of the diesel engine 150. The output of the diesel engine 150 is determined by the amount of fuel injected to the diesel engine 150 by the fuel injection pump 171. Therefore, the EFIECU 170 receives information about energy Pd necessary for the power system from the control ECU 180, determines energy Pe to be outputted from the diesel engine 150 based on the information, and sets the fuel injection amount and turbo charging amount. The energy Pe to be outputted by this diesel engine 150 is determined by the following equation (4).

$$Pe = Pd + P\alpha + Paux \quad (4)$$

In the equation, Pd is energy determined based on a driving force (torque $\times$ revolution number) to be output to the driving shaft, P$\alpha$ is energy necessary for adjustment of charging/discharging of the battery 194 (hereinafter referred to as energy for adjustment) and Paux is energy necessary for operating such auxiliary machinery as a compressor. Because the battery 194 is desired to be kept in an appropriate charging state for future charging/discharging, if the residual capacity is small as compared with an appropriate charging state, charging is necessary. Therefore, energy P$\alpha$ for adjustment becomes a positive value so that energy of that amount is output from the diesel engine 150. On the other hand, if the residual capacity is high as compared with the appropriate range, energy P$\alpha$ for adjustment becomes a negative value so that electric energy is brought out from the battery 194 to operate the vehicle.

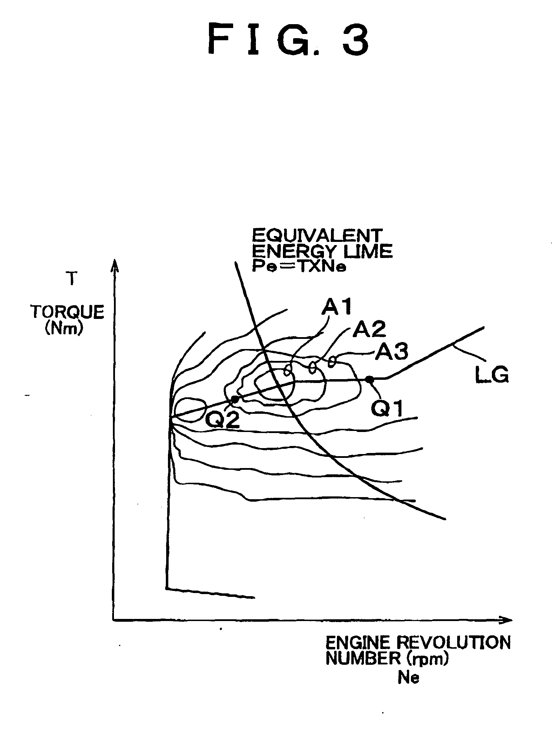

In the hybrid vehicle of 2-motor type employing the planetary gear 120, the revolution number and torque of the diesel engine 150 are not automatically determined by the revolution number and torque of the wheel shaft 112. The state of the wheel shaft 112, that is, the torque and revolution number can be controlled freely within a range satisfying the above equations (1) to (3) related with the planetary gear 120 depending upon the operating state of the two motors MG1, MG2. The EFIECU 170 only has to perform control so as to output necessary energy from the diesel engine 150. If the EFIECU 170 secures a necessary output, the control ECU 180 controls the two motors MG1, MG2 so as to output revolution number and torque required for the wheel shaft 112 and controls the diesel engine 150 so that it is operated at the highest efficient point. Fig. 3 shows this state- Lines drawn as contour lines in Fig. 3 indicate a combination of the revolution number and torque producing the same efficiency. A closed range A1 in Fig. 3 indicates an operating region having the highest efficiency and the Fig. 3 indicates that the efficiency drops as it goes outward to the ranges A2, A3. In Fig. 3, its abscissa axis indicates the revolution number of the engine while the ordinate axis indicates torque. Because torque $\times$ revolution number corresponds to energy, "equivalent energy line" can be written into this diagram. To avoid complicatedness of the diagram, only one line of equivalent energy lines is drawn in Fig. 3. If the output Pe is determined, the diesel engine 150 is operated on a corresponding equivalent energy line. Driving at the highest efficient point by controlling the revolution number of the diesel engine 150 is achieved by a control by the control ECU 180. As a result, in the control unit of this embodiment, the diesel engine 150 is operated so that its highest efficient point is selected as indicated by a solid line LG. This solid line LG is called optimum output line LG. The embodiment which will be described below is achieved on the premise of the above-described control.

C. Control of the first embodiment:

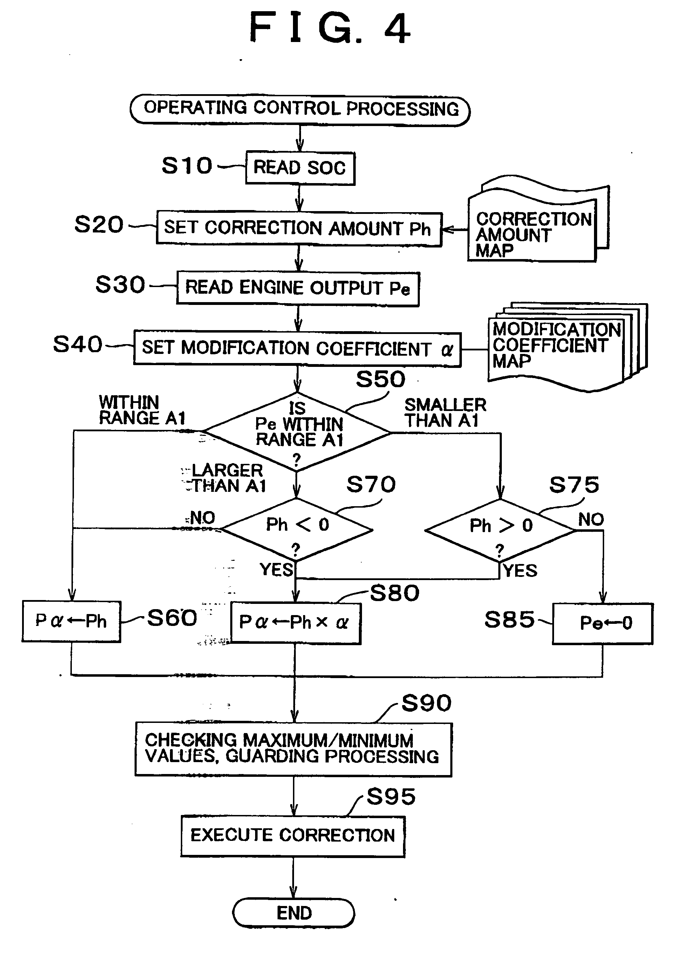

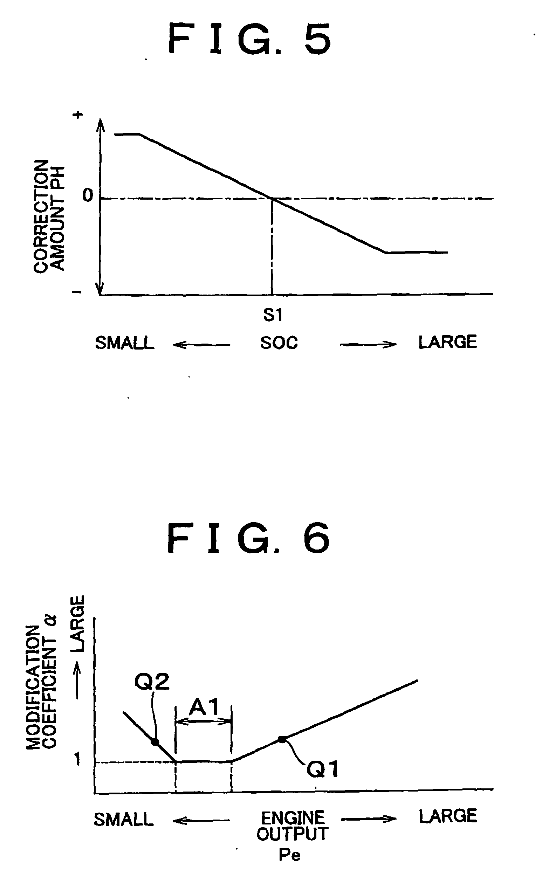

The control unit of the diesel hybrid vehicle of this embodiment having the above-described structure executes operating control processing shown in Fig. 4. The control ECU 180 carries out reading processing of SOC of the battery 194 by reading a signal from the battery sensor 196 (step S10). The SOC is the same as the residual capacity of the battery 194. The control ECU 180 executes a processing for determining a correction amount Ph relative to the SOC based on this SOC (step S20). Although the correction amount Ph can be determined by arithmetic operation, in this embodiment, it is set by referring to a correction amount map which has been prepared in advance. Fig. 5 shows an example of the correction amount map. In the hybrid vehicle, the residual capacity of the battery 194 is desired to be kept in a predetermined range for future use. If the battery 194 is fully charged (SOC is large), the correction amount Ph is set to a negative value to allow discharge. If the residual capacity of the battery 194 is insufficient (SOC is small), the correction amount Ph is set to a positive value to execute charging. According to this embodiment, the correction amount Ph is 0 in the case where the SOC is the predetermined value S1. In other cases, the correction amount Ph is set based on the relation having a predetermined value while satisfying the above described relation. The correction amount Ph may be set to 0 in a predetermined width relative to the predetermined value S1, for example, in the range of $\pm\Delta$S.

Next, the control ECU 180 executes a processing of reading a current output Pe (Pe = Pd + Ph + Paux) of the diesel engine 150 based on data exchanged with the EFIECU 170 (step S30). The point (combination of torque and revolution number) at which the diesel engine 150 is operated can be identified if the current output Pe of the diesel engine is determined, because the diesel engine 150 is operated along the optimum output line LG shown in Fig. 3. Next, a processing for setting a modification coefficient $\alpha$ for modifying the correction amount Ph according to the output Pe of the engine is performed (step S40). According to this embodiment, this modification coefficient $\alpha$ is determined based on the modification coefficient map shown in Fig. 6. However, it may be set according to an equation or the like. If the engine output Pe is in the range A1 shown in Fig. 3 as exemplified by Fig. 6, no modification is needed because the diesel engine 150 is operated in the most efficient state. According to this embodiment, the modification is executed by accumulation. Therefore, the modification coefficient $\alpha$ in this case is set to the value 1. The modification coefficient $\alpha$ is set to a value which increases gradually as the engine output Pe becomes further from the range A1. The reason is that the operating efficiency drops whether the energy Pe output of the diesel engine 150 is large or small as compared with the range A1. It is preferable that the diesel engine 150 should be operated in a range as near the range A1 as possible in terms of operating efficiency and fuel consumption.

Following the above-described processing, in step 50 and the subsequent steps, a processing for determining energy $P\alpha$ necessary for adjustment of charging/discharging of the battery from the correction amount Ph and modification coefficient $\alpha$ is performed by determining the range of the output Pe of the engine and the volume of the correction amount Ph. First, what relation the output Pe of the engine has relative to the range A1 is determined (step S50). If the output Pe of the engine is in the range A1, the operating state of the diesel engine 150 does not have to be changed. Thus, a processing for setting the correction amount Ph determined based on the map as energy $P\alpha$ for adjustment is performed (step S60).

On the other hand, if the output Pe of the engine is larger than the range A1 or the engine is operated at the operating point Q1 shown in Figs. 3 and 6 (if it is determined that the output Pe is larger than A1 in step S50), it is determined whether or not the correction amount Ph is less than 0 (step S70). That is, whether or not the SOC is larger than a predetermined value S1 is determined according to a map about the correction amount shown in Fig. 5. Unless the SOC is less than the predetermined value S1, an output of a predetermined magnitude is required of the engine as a requirement based on the residual capacity of the battery 194. Thus, in this case, even if the diesel engine 150 is operated deviating from the most efficient range A1, the operating state of the diesel engine 150 cannot be brought near the range A1 having the highest efficiency if nothing is done. To bring the operating state near the range A1, the output of the engine needs to be reduced. In that case, it may not be ensured that the residual capacity of the battery 194 is held in an appropriate range. Whether precedence should be given to the operating efficiency of the diesel engine 150 or appropriation of the residual capacity of the battery 194 depends on system design. An embodiment in which precedence is given to the operating efficiency of the diesel engine 150 will be described.

If the determination of step S70 is NO or the correction amount Ph is not less than 0, the correction amount Ph determined based on the map is set as energy $P\alpha$ for adjustment as it is (step S60). On the other hand, if the correction amount Ph is less than 0 (step S70), a processing for determining energy $P\alpha$ for adjustment by multiplying the correction amount Ph with the modification coefficient $\alpha$ is performed (step S80). This processing corresponds to a case where in Figs. 3 and 6, with the diesel engine operated at the operating point Q1, it is determined that the operating state can be brought near the range A1 by reducing the output of the diesel engine 150 from the viewpoint of the SOC of the battery 194. In this case, the absolute value of the correction amount Ph is modified to a large value in order to improve the operating efficiency of the diesel engine 150.

If in step S50, it is determined that the output Pe of the engine is small as compared with the range A1, whether or not the correction amount Ph is larger than the value 0 is determined (step S75). This processing is a processing symmetrical to step S70. An negative determination (NO) is made in step S75 when in Figs. 3 and 6, the output is small as compared with the range A1 having the highest operating efficiency (e.g., the diesel engine is operated at the operating point Q2) and while the SOC of the battery 194 is higher than a predetermined value S1 (when overcharged). In this case, although the output of the diesel engine 150 is desired to be reduced from the viewpoint of the SOC of the battery 194, the operating efficiency is decreased further if it is actually reduced. Thus, in this case, the energy Pe required of the engine from the battery 194 is set to the value 0 (step S85) in order to prevent engine efficiency from dropping. Unless the output of the diesel engine 150 is reduced, the battery 194 is normally further charged so that the SOC is increased gradually. In the hybrid vehicle of the first embodiment, the operation of the diesel engine 150 is stopped and after that, the vehicle is traveled with the motors MG1 and MG2 using electric power accumulated in the battery 194. Energy Pe may be of a value smaller than Pd + Paux.

On the other hand, if it is determined that the correction amount Ph is larger than the value 0 in step S75, a processing for determining energy $P\alpha$ for adjustment by multiplying the correction amount Ph with the modification coefficient $\alpha$ is performed (step S80). This processing corresponds to a case where in Figs. 3 and 6, the diesel engine is operated at the operating point Q2 and it is determined that the operating state can be brought near the range A1 by increasing the output of the diesel engine 150 from the viewpoint of the SOC of the battery 194.

Energy $P\alpha$ for adjustment, which is used for calculation of energy required for the engine is set by processing in any one of step S60, step S80 and step 85. After these processings, checking the maximum and minimum values and guard processing are performed (step S90). Whether or not a determined energy $P\alpha$ is between the preliminarily set minimum value and maximum value is checked. If the determined energy $P\alpha$ is outside this range, it is guarded by setting the minimum value and maximum value. After the energy $P\alpha$ for adjustment is set to an appropriate value, the correction is performed (step S95). In this correction, the output Pe of the diesel engine 150 is corrected according to the equation (4) described above. The determined output Pe is output to the EFIECU 170 and then, the EFIECU 170 controls the fuel injection pump 171 based on this output Pe so as to adjust energy to be output from the diesel engine 150 to a desired value.

In the control apparatus of the diesel hybrid vehicle according to this embodiment, as indicated in the equation (4), the output of the diesel engine 150 is determined by not only a current driving force requirement Pd but also by considering the energy Pα necessary for adjustment of the SOC of the battery 194. Further, according to this embodiment, in the case where the diesel engine 150 is not operated in an operating range ensuring the highest efficiency and this state is permitted from the viewpoint of the SOC of the battery 194, the correction amount Ph is modified by using the modification coefficient α and the diesel engine 150 is operated in a range ensuring the higher operating efficiency (step S80). On the other hand, a drop in the operating efficiency of the diesel engine 150 due to a requirement based on the SOC of the battery 194 is prevented (step S60 or step S85). By performing these processings, the operating efficiency of the diesel engine 150 in a hybrid vehicle employing the diesel engine 150 as an energy source can be improved on an average level.

According to this embodiment, because torque conversion is executed using the two motors MG1 and MG2, such an advantage that the operating point of the diesel engine 150 can be controlled freely is obtained. Further, because electric power can be taken into/out of the battery 194, so-called EV traveling using only electric power accumulated in the battery 194 is possible, so that this hybrid vehicle can select a higher efficiency operating mode depending on its operating state.

D. Control of the second embodiment

According to the first embodiment described above, if the modification of energy Pα for adjustment in the direction of increasing the operating efficiency of the diesel engine 150 is different from a requirement from the viewpoint of the SOC of the battery 194, the processing for modifying the correction amount Ph with the modification coefficient α (step S80) is not performed. The reason is that precedence is given to the requirement of controlling the SOC of the battery 194 to an appropriate range. Additionally, it is possible to achieve control of raising the operating efficiency of the diesel engine 150 while satisfying the SOC of the battery 194 within an appropriate range. The reason is that in the case of controlling the SOC into an appropriate range, there is a flexibility on the system design in terms of how quickly the SOC is moved to the appropriate range because charging/discharging takes time. Hereinafter, the second embodiment will be described, in which higher precedence is given to the control for meeting a requirement of raising the operating efficiency of the diesel engine 150.

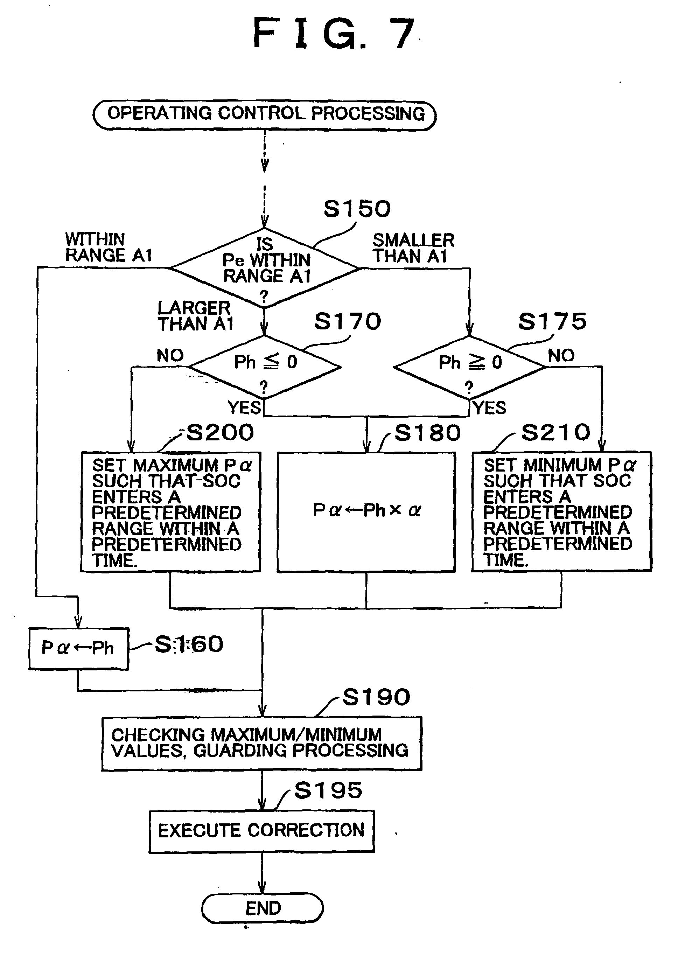

The control apparatus of the diesel hybrid vehicle of the second embodiment has the same hardware structure as the first embodiment and is different only in the processing performed by the control ECU 180. An outline of the processing to be performed by the control ECU 180 is shown by a flow chart of Fig. 7. Meanwhile, the same processing (step S10 to S40) as the first embodiment is omitted in the Fig. 7. The same processing as the first embodiment shown in Fig. 4 is indicated by step numbers whose lower two digits are the same as those of the step numbers in Fig. 4.

According to the second embodiment, like the first embodiment, after reading of the SOC of the battery 194 and setting of the correction amount Ph and the modification coefficient α, the relation between the operating range of the diesel engine 150 and the range A1 ensuring the highest efficiency is determined (step S150). In addition, the relation between the correction amount Ph and the value 0 in terms of their magnitude is determined (steps S170, S175). If the output Pe of the engine is included in the range A1 or the correction using the correction amount Ph improves the efficiency of the engine, the same processing as in the first embodiment is performed in any case (steps S160, S180). Checking the maximum value and minimum value, guard processing (step S190) and execution of the correction (step S195) are performed like the first embodiment.

According to this embodiment, a processing which is different from the first embodiment in following points is performed. If the output of the diesel engine 150 is larger than the range A1 ensuring the highest efficiency and the correction amount Ph is larger than 0, the maximum energy Pα for adjustment is set such that the SOC enters a predetermined range within a predetermined time (step S200). On the other hand, if the output of the diesel engine 150 is small as compared with the range A1 ensuring the highest efficiency and the correction amount Ph is less than 0, the minimum energy Pα for adjustment is set such that the SOC enters a predetermined range within a predetermined time (step S210). In other words, under each of the conditions, although the output is desired to be adjusted toward the side of the operating range A1 ensuring the high efficiency from the viewpoint of the operating state of the diesel engine 150, increasing/decreasing the output to that direction is contrary to the requirement based on the charging state of the battery 194. According to the first embodiment, under these conditions, the energy Pα for adjustment is set to the correction amount Ph itself (step S60 in Fig. 4) or the energy Pe for adjustment is set to 0 (step S85 in Fig. 4). According to the second embodiment, the energy Pα for adjustment is set to a maximum value or a minimum value such that the SOC of the battery 194 enters a predetermined range within a predetermined time.

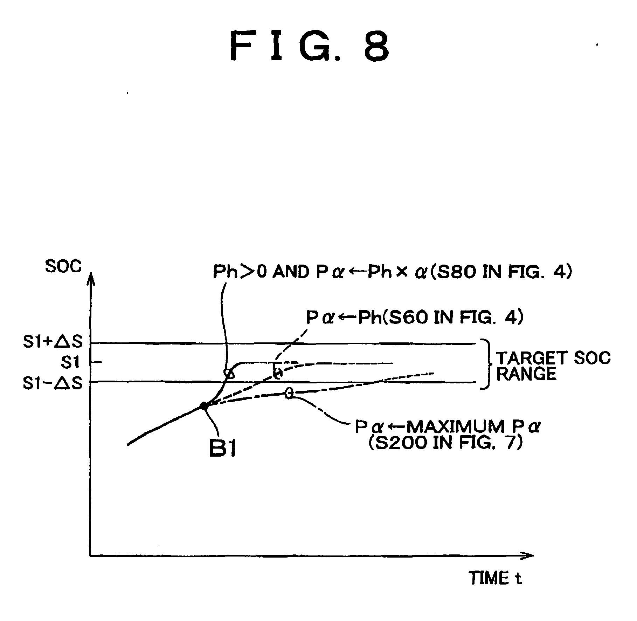

Fig. 8 shows the state of this adjustment. Fig. 8 is a graph showing a subsequent control state in a case where operating is performed at the operating point B1 (Ph>0) at which the SOC of the battery 194 is below a predetermined range (S1±ΔS). Even if the state of the battery 194 is located at the same point B1, a subsequent control differs depending upon whether the diesel engine 150 is operated at a point Q1 indicated in Fig. 3 or at a point Q2. If the diesel engine 150 is located at the operating point Q2 shown in Fig. 3, the direction of output adjustment by the SOC coincides with the direction of efficiency improvement by the diesel engine 150. Thus, the energy Pα for adjustment is modified with the modification coefficient α, so that the output Pe of the diesel engine 150 is increased further. On the other hand, if the diesel engine 150 is operated at the operating point Q1 indicated in Fig. 3, it is not preferable to increase the output of the diesel engine 150 further in order to charge the battery 194 from the viewpoint of the operating efficiency of the engine. According to the first embodiment, in this case, the energy Pα for adjustment is set as the correction amount Ph to maintain the current state (step S50-S70-S60 in Fig. 4). In this case, the diesel engine 150 continues the operation at the same output and the operating efficiency of the diesel engine 150 is not improved. Then, the SOC of the battery 194 enters a predetermined range. In this case as well, although the operating efficiency is not improved, the operating state is not controlled so as to drop its efficiency according to a requirement based on the SOC. Thus, the total operating efficiency is improved as compared to a conventional art.

In contrast, according to the second embodiment, under the same condition, the maximum energy Pα for adjustment is determined and set such that the SOC of the battery 194 enters a predetermined range (S1±ΔS) within a predetermined time (step S210). Therefore, the output of the diesel engine 150 is slightly reduced by the EFIECU 170, and consequently, the efficiency is improved. Although the energy Pα for adjustment is reduced, the output Pe of the diesel engine 150 is maintained to such an extent that charging of the battery 194 is executed. Thus, the battery 194 is charged. However, time for charging is prolonged. Although the above description uses an example that the SOC of the battery 194 is lower than a predetermined range S1±ΔS, even if the SOC is higher than the predetermined range, the same control is performed. That is, if decreasing the output of the diesel engine 150 further to charge the battery 194 is not desired from the viewpoint of the operating efficiency of the engine, the minimum energy Pα for adjustment is determined and set such that the SOC of the battery 194 enters a predetermined range (S1±ΔS) within a predetermined time (step S200). Thus, the output of the diesel engine 150 is slightly increased by the EFIECU 170, so that consequently, its efficiency is improved.

According to the second embodiment described above, even if the modifying direction for increase/decrease of the output of the diesel engine 150 from the viewpoint of the SOC of the battery 194 does not coincide with the direction for increase/decrease of the output from the viewpoint of the efficiency of the diesel engine 150, the output of the diesel engine 150 is controlled by determining the minimum or maximum energy Pα for adjustment such that the SOC enters a predetermined range within a predetermined time. As a result, in any case, the operating efficiency of the diesel engine 150 is improved. The first and second embodiments are different in the method for adjustment of the output of the diesel engine 150 when the direction of the output adjustment by the SOC does not coincide with the direction of the efficiency improvement of the diesel engine 150 as described above. However, this is a problem about how and to which condition precedence is given and therefore, any one of the methods in the first and second embodiments can be adopted from technical viewpoints.


E. Other modifications

For example, if a future operating state of the vehicle can be estimated by means of car navigation system or the like, the vehicle can adopt a more desired control by changing the control shown in Figs. 4 and 7. Further, it is possible to adopt such a learning control by adopting any one control over a predetermined period (for example, several days or several months), then adopting the other control for the same period, comparing fuel consumption of both and finally adopting a control ensuring higher efficiency. Although according to the above-described embodiment, the correction of the output of the diesel engine 150 is achieved through the energy Pα for adjustment for charging/discharging the battery 194, the output Pe of the diesel engine 150 may be corrected directly.

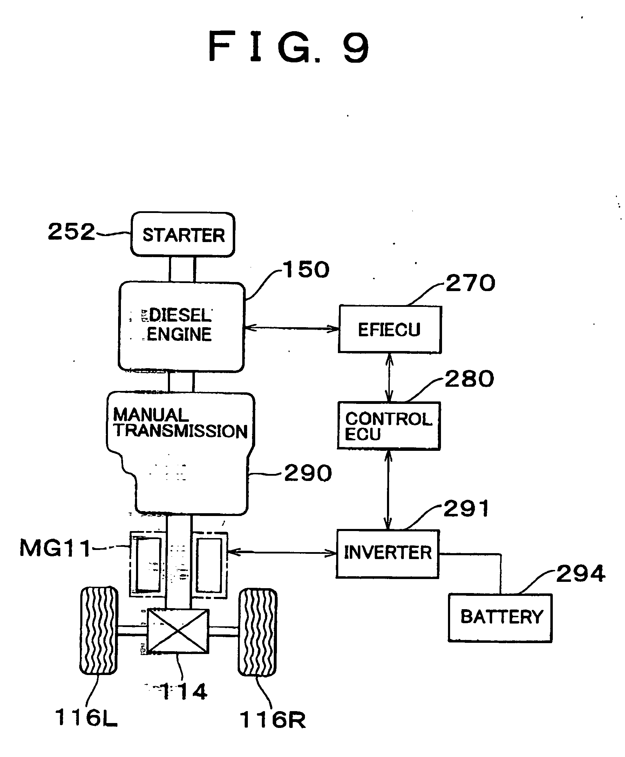

Although according to the first and second embodiments, the hybrid vehicle is a parallel hybrid vehicle using two motors MG1 and MG2, the invention is not limited to application to this type of the hybrid vehicle, but may be applied to various types of the vehicles which include at least a prime mover for bringing out power by combustion of fuel and at least a motor capable of outputting a driving force necessary for traveling a vehicle. For example, the invention may be applied to a 1-motor type hybrid vehicle shown in Fig. 9. In the hybrid vehicle shown in Fig. 9, a manual transmission 290 is coupled to the output shaft of the diesel engine 150 and a motor MG11 for assisting and regenerating is coupled to the output shaft of this transmission 290. The control of the diesel engine 150 is executed by the EFIECU 270 while the control of the motor MG11 through an inverter 291 is executed by a control ECU 280- Electricity for driving the motor MG11 is accumulated in the battery 294. In the meantime, this type of the vehicle is provided with a dedicated stator 252 for starting the diesel engine 150.

Because in the hybrid vehicle having such a structure, the diesel engine 150 is mechanically coupled with the driving shaft through the manual transmission 290, the output torque and revolution number of the diesel engine 150 are determined by torque and revolution number required for the driven wheels 116L, 116R and by the transmission gear ratio of the transmission 290. Thus, this type of the hybrid vehicle is not always capable of achieving operation on an optimum output line LG shown in Fig. 3 and however, the operating efficiency of the diesel engine 150 can be obtained from Fig.3 if its torque and revolution number are apparent. Thus, if like the above-described embodiments, the output of the diesel engine 150 is corrected by increasing or decreasing while determining the relation between modification of the engine output from the viewpoint of the SOC of the battery 294 and the increase/decrease of the output from the viewpoint of the operating efficiency of the diesel engine 150, the efficiency of the diesel engine 150 can be kept from dropping and further, can be improved.

If the output of a diesel engine 150 is small as compared with a range A1 in which the operating efficiency is the highest step S50 and the correction amount Ph based on a charging state of a battery 194 is less than 0 step S75, the output Pe of the diesel engine is set to the value 0 without executing a processing step S80 of modifying the correction amount Ph for adjustment of the output of the diesel engine 150 by using a modification coefficient $\alpha$. Consequently, a drop in engine efficiency is not caused by the charging state of the battery 194.

Although the embodiments of the invention have been described, the invention is not restricted to these embodiments, and needless to say, the invention may be modified in various ways within a range not departing from the spirit of the invention. Although the hybrid vehicle of this embodiment utilizes the diesel engine 150 adopting the common rail type fuel injection pump as its prime mover, it can use other types of the diesel engines. Further, although according to this embodiment, the three-phase synchronous motor is adopted as the motor, an induction motor, other AC motor or DC motor may be employed. Further, although according to this embodiment, various kinds of control processings are achieved by CPU's executing software, such control processing can be achieved by discrete hardware configuration. Additionally, the battery of the above-described embodiments may be replaced with an electric energy storage device which can be charged or discharged such as a capacitor.

If the output of a diesel engine (150) is small as compared with a range (A1) in which the operating efficiency is the highest (step S50) and the correction amount (Ph) based on a charging state of a battery (194) is less than 0 (step S75), the output (Pe) of the diesel engine is set to the value 0 without executing a processing (step S80) of modifying the correction amount (Ph) for adjustment of the output of the diesel engine (150) by using a modification coefficient ($\alpha$). Consequently, a drop in engine efficiency is not caused by the charging state of the battery (194).

**Claims**

1. A control apparatus of a diesel hybrid vehicle having a diesel engine (150), motors/generators (MG1, MG2) for selectively generating a driving force or generating a charging current, and an electric energy storage device (194) acting as an electric power supplying source to the motors (MG1, MG2), which is charged by these when these generate the charging current, **characterized by** comprising:

   correction amount determining means (180, S20) for determining a correction amount (Ph) relative to an output of the diesel engine (150) based on a charging state (SOC) of the electric energy storage device (194); and correcting means (180, S30-S95; S150-S195) for correcting the output (Pe) of the diesel engine (150) by modifying the correction amount (Ph) such that an operating efficiency of the diesel engine (150) is increased according to a relation between an operating state and the operating efficiency of the diesel engine (150).

2. The control apparatus according to claim 1, **characterized in that** the correcting means (180, S30-S95; S150-S195) includes first means (180, S80, S180) for modifying the correction amount (Ph) such that the operating efficiency of the diesel engine (150) is increased according to the relation between the operating state and the operating efficiency of the diesel engine (150) and second means (180, S95) for correcting the first required amount (Pe) relative to the diesel engine (150) by using the modified correction amount (P$\alpha$) and determining a second required amount (Pe) relative to the output of the diesel engine (150), the control apparatus further comprising operating means (170) for operating the diesel engine by using the output of the diesel engine (150) corresponding to the second required amount (Pe).

3. The control apparatus according to claim 1 or 2, **characterized in that** the output to the diesel engine (150) prior to correction based on the correction amount (Ph) is determined based on a third required amount (Pd. Pa) required from a driving unit to which the driving force is transmitted and auxiliary machinery, and the first required amount (Pe) includes the correction amount (Ph) and the third required amounts (Pd, Pa).

4. The control apparatus according to any one of claims 1 to 3, **characterized in that** when a first correction of the output of the diesel engine (150) based on the correction amount (Ph) according to the charging state (SOC) of the electric energy storage device (194) and a second correction of the output of the diesel engine (150) based on the relation between the operating state and the operating efficiency increase/decrease the output of the diesel engine (150) in the same direction, the first means (180, S80, S180) modifies the correction amount (Ph).

5. The control apparatus according to claim 4, **characterized in that** the correcting means (180, S30-S95; S150-S195) has a memory means for previously memorizing a modification coefficient ($\alpha$) relative to the correction amount (Ph),
determines whether it is necessary to multiply the correction amount (Ph) with the modification coefficient ($\alpha$) based on the sign of the correction amount (Ph) and the relation between the first required amount (Pe) and the operating efficiency, and
if it is determined that multiplying the correction amount (Ph) with the modification coefficient ($\alpha$) is necessary, multipliers the correction amount (Ph) with the modification coefficient ($\alpha$) so as to modify the correction amount (Ph).

6. The control apparatus according to claim 5, **characterized in that** when the first correction and the second correction increase/decrease the output of the diesel engine (150) in the same direction, the first means (180, S80; S180) multiplies the correction amount (Ph) with the modification coefficient ($\alpha$) which is larger than 1 so as to modify the correction amount (Ph).

7. The control apparatus according to any one of claims 4 to 6. **characterized in that** when the first correction and the second correction increase/decrease the output of the diesel engine (150) in opposite directions, the correcting means (180, S30-S95; S150-S195) modifies the correction amount (Ph) so that the charging amount of the electric energy storage device (194) enters a predetermined range within a predetermined time.

8. The control apparatus according to any one of claims 4 to 6, **characterized in that** when the first correction and the second correction increase/decrease the output of the diesel engine (150) in opposite directions, the operating means (170) operates the diesel engine (150) by using the output of the diesel engine (150) based on the first required amount (Pe).

9. The control apparatus according to any one of claims 4 to 8, **characterized in that** when the first correction and the second correction increase/decrease the output of the diesel engine (150) in opposite directions and the sign of the correction amount (Ph) is positive, the correcting means (180, S30-S95, S150-S195) does not correct the correction amount (Ph).

10. The control apparatus according to any one of claims 4 to 9, **characterized in that** when the first correction and the second correction-increase/decrease the output of the diesel engine (150) in opposite directions and the sign of the correction amount (Ph) is negative, the operating means (170) stops the diesel engine (150).

11. The control apparatus according to any one of claims 5 to 10, **characterized in that** the modification coefficient ($\alpha$) when the operating efficiency of the diesel engine (150) is in the highest range (A1) is set as a reference value, the modification coefficient ($\alpha$) being increased as the operating efficiency of the diesel engine (150) becomes further from the range (A1).

12. The control apparatus according to claim 2 or 3, **characterized in that** the correcting means (180, S30-S95; S150-S195) further comprises a required amount determining means (S30) for determining the first required amount (Pe) corresponding to the diesel engine (150) based on the correction amount (Ph) prior to modification,
the correcting means (180, S30-S95, S150-S195) determines whether the first required amount (Pe) is within an appropriate operating region of the diesel engine (150), and
if it is determined that the first required amount (Pe) is out of the appropriate operating region, the first means (180, S80, S180) modifies the correction amount (Ph).

13. The control apparatus according to claim 12, **characterized in that** if it is determined that the first required amount (Pe) is within the appropriate operating region, the operating means (170) operates the diesel engine (150) based on the first required amount (Pe).

14. The control apparatus according to claim 13, **characterized in that** if it is determined that the first required amount (Pe) is within the appropriate operating region, the first means (180, S80; S180) does not modify the correction amount (Ph).

**15.** The control apparatus according to claim 12 to 14, **characterized in that** the correcting means (180, S30-S95; S150-S195) determines whether the first required amount (Pe) should be increased or decreased based on the operating state and the operating efficiency of the diesel engine (150), and

if the determined increasing/decreasing direction is the same as the increasing/decreasing direction of the output determined based on the correction amount (Ph), the first means (180. S80; S180) increases the magnitude of the correction amount (Ph).

**16.** The control apparatus according to any one of claims 12 to 15, **characterized in that** the correcting means (180, S30-S95; S150-S195) determines whether the first required amount (Pe) should be increased or decreased based on the operating state and the operating efficiency of the diesel engine (150), and

if it is determined that the first required amount (Pe) should be decreased and the correction of the first required amount (Pe) based-on the correction amount (Ph) is correction for increasing, the first means (180, S80; S180) does not modify the correction amount (Ph).

**17.** The control apparatus according to any one of claims 12 to 16, **characterized in that** the correcting means (180, S30-S95; S150-S195) determines whether the first required amount (Pe) should be increased or decreased based on the operating state and the operating-efficiency of the diesel engine (150), and

if it is determined that the first required amount (Pe) should be increased and the correction of the required amount (Pe) based on the correction amount (Ph) is correction for decreasing, the operating means (170) stops the diesel engine (150).

**18.** The control apparatus according to any one of claims 12 to 15, and 17, **characterized in that** the correcting means (180, S30-S95; S150-S195) determines whether the first required amount (Pe) should be increased or decreased based on the operating state and the operating efficiency of the diesel engine (150), and

if it is determined that the first required amount (Pe) should be decreased and the correction of the first required amount (Pe) based on the correction amount (Ph) is correction for increasing, the correcting means (180, S30-S95; S150-S195) modifies the correction amount (Ph) so that the charging amount of the electric energy storage device (194) enters a predetermined range within a predetermined time.

**19.** The control apparatus according to any one of claims 12 to 16, and 18, **characterized in that** the correcting means (180, S30-S95; S150-S195) determines whether the first required amount (Pe) should be increased or decreased based on the operating state and the operating efficiency of the diesel engine (150), and

if it is determined that the first required amount (Pe) should be increased and the correction of the first required amount (Pe) based on the correction amount (Ph) is correction for decreasing, the correcting means (180, S30-S95; S150-S195) modifies the correction amount (Ph) so that the charging amount of the electric energy storage device (194) enters a predetermined range within a predetermined time.

**20.** The control apparatus of a diesel hybrid vehicle according to any one of claims 1 to 19, **characterized in that** the electric energy storage device (194) is a battery.

**21.** A control method of a diesel hybrid vehicle having a diesel engine (150), motors/generators (MG1, MG2) for selectively generating a driving force or generating a charging current, and an electric energy storage device (194) acting as an electric power supplying source to the motors (MG1, MG2), which is charged by these when these generate the charging current, **characterized in that**

a correction amount (Ph) relative to the output of the diesel engine (150) is determined based on the charging state (SOC) of the electric energy storage device (194), and

the correction amount (Ph) is modified such that the operating efficiency of the diesel engine (150) is increased according to the relation between the operating state and the operating efficiency of the diesel engine (150) so as to correct the output of the diesel engine (150).

**Patentansprüche**

**1.** Steuerungsvorrichtung eines Diesel-Hybridfahrzeugs mit einer Dieselmaschine (150), Motoren/Generatoren (MG1, MG2) zum selektiven Erzeugen einer Antriebskraft oder Erzeugen eines Ladestroms sowie einer elektrischen Energiespeichervorrichtung (194), die als eine elektrische Leistungszufuhrquelle für die Motoren (MG1, MG2) agiert, die durch diese geladen wird, wenn diese den Ladestrom erzeugen, **gekennzeichnet durch** eine Korrekturgrößenbestimmungseinrichtung (180, S20) zur Bestimmung einer Korrekturgröße (Ph) in Bezug auf einen Ausgang der Dieselmaschine (150) auf der Grundlage eines Ladezustands (SOC) der elektrischen Energiespeichervorrichtung (194), und

einer Korrektureinrichtung (180, S30 - S95; S150 - S195) zum Korrigieren des Ausgangs (Pe) der Dieselmaschine (150) durch Modifizieren der Korrekturgröße (Ph) derart, dass ein Betriebswirkungsgrad der Dieselmaschine (150) entsprechend einer Beziehung zwischen einem Betriebszustand und dem Betriebswirkungsgrad der Dieselmaschine (150) erhöht wird.

2. Steuerungsvorrichtung nach Anspruch 1, **dadurch gekennzeichnet, dass** die Korrektureinrichtung (180, S30 - S95; S150 - S195) eine erste Einrichtung (180, S80, S180) zum Modifizieren der Korrekturgröße (Ph) derart, dass der Betriebswirkungsgrad der Dieselmaschine (150) entsprechend der Beziehung zwischen dem Betriebszustand und dem Betriebswirkungsgrad der Dieselmaschine (150) erhöht wird, und eine zweite Einrichtung (180, S95) zur Korrektur der ersten erforderlichen Größe (Pe) in Bezug auf die Dieselmaschine (150) durch Verwendung der modifizierten Korrekturgröße (Pα) und Bestimmung einer zweiten erforderlichen Größe (Pe) in Bezug auf den Ausgang der Dieselmaschine (150) aufweist,

wobei die Steuerungsvorrichtung weiterhin eine Betriebseinrichtung (170) zum Betreiben der Dieselmaschine durch Verwendung des Ausgangs der Dieselmaschine (150) entsprechend der zweiten erforderlichen Größe (Pe) aufweist.

3. Steuerungsvorrichtung nach Anspruch 1 oder 2, **dadurch gekennzeichnet, dass** der Ausgang der Dieselmaschine (150) vor der Korrektur auf der Grundlage der Korrekturgröße (Ph) auf der Grundlage einer dritten erforderlichen Größe (Pd, Pa) bestimmt wird, die von einer Antriebseinheit, zu der die Antriebskraft übertragen wird, und einer Hilfsmaschinerie angefordert wird, und

die erste erforderliche Größe (Pe) die Korrekturgröße (Ph) und die dritten erforderlichen Größen (Pd, Pa) aufweist.

4. Steuerungsvorrichtung nach einem der Ansprüche 1 bis 3, **dadurch gekennzeichnet, dass**, wenn eine erste Korrektur des Ausgangs der Dieselmaschine (150) auf der Grundlage der Korrekturgröße (Ph) entsprechend dem Ladezustand (SOC) der elektrischen Energiespeichervorrichtung (194) und eine zweite Korrektur des Ausgangs der Dieselmaschine (150) auf der Grundlage der Beziehung zwischen dem Betriebszustand und dem Betriebswirkungsgrad den Ausgang der Dieselmaschine (150) in dieselbe Richtung erhöhen/verringern, die erste Einrichtung (180, S80, S180) die Korrekturgröße (Ph) modifiziert.

5. Steuerungsvorrichtung nach Anspruch 4, **dadurch gekennzeichnet, dass** die Korrektureinrichtung (180, S30 - S95; S150 - S195) eine Speichereinrichtung zum Vorabspeichern eines Modifikationskoeffizienten (α) in Bezug auf die Korrekturgröße (Ph) aufweist,

auf der Grundlage des Vorzeichens der Korrekturgröße (Ph) und der Beziehung zwischen der ersten erforderlichen Größe (Pe) und den Betriebswirkungsgrad bestimmt, ob es notwendig ist, die Korrekturgröße (Ph) mit dem Modifikationskoeffizienten (α) zu modifizieren, und,

falls bestimmt wird, dass ein Modifizieren der Korrekturgröße (Ph) mit dem Modifikationskoeffizienten (α) erforderlich ist, die Korrekturgröße (Ph) mit dem Modifikationskoeffizienten (α) multipliziert, um die Korrekturgröße (Ph) zu modifizieren.

6. Steuerungsvorrichtung nach Anspruch 5, **dadurch gekennzeichnet, dass**, wenn die erste Korrektur und die zweite Korrektur den Ausgang der Dieselmaschine (150) in dieselbe Richtung erhöhen/verringern, die erste Einrichtung (180, S80; S180) die Korrekturgröße (Ph) mit dem Modifikationskoeffizienten (α) multipliziert, der größer als 1 ist, um die Korrekturgröße (Ph) zu modifizieren.

7. Steuerungsvorrichtung nach einem der Ansprüche 4 bis 6, **dadurch gekennzeichnet, dass**, wenn die erste Korrektur und die zweite Korrektur den Ausgang der Dieselmaschine (150) in entgegengesetzten Richtungen erhöhen/verringern, die Korrektureinrichtung (180, S30 - S95; S150 - S195) die Korrekturgröße (Ph) derart modifiziert, dass die Ladegröße der elektrischen Energiespeichervorrichtung (194) innerhalb einer vorbestimmten Zeit in einen vorbestimmten Bereich gelangt.

8. Steuerungsvorrichtung nach einem der Ansprüche 4 bis 6, **dadurch gekennzeichnet, dass**, wenn die erste Korrektur und die zweite Korrektur den Ausgang der Dieselmaschine (150) in entgegengesetzte Richtungen erhöhen/verringern, die Betriebseinrichtung (170) die Dieselmaschine (150) unter Verwendung des Ausgangs der Dieselmaschine (150) auf der Grundlage der ersten erforderlichen Größe (Pe) betreibt.

9. Steuerungsvorrichtung nach einem der Ansprüche 4 bis 8, **dadurch gekennzeichnet, dass**, wenn die erste Korrektur und die zweite Korrektur den Ausgang der Dieselmaschine (150) in entgegengesetzten Richtungen erhöhen/verringern, und das Zeichen der Korrekturgröße (Ph) positiv ist, die Korrektureinrichtung (180, S30 - S95, S150 - S195) die Korrekturgröße (Ph) nicht korrigiert.

10. Steuerungsvorrichtung nach einem der Ansprüche 4 bis 9, **dadurch gekennzeichnet, dass**, wenn die erste Korrektur und die zweite Korrektur den Ausgang der Dieselmaschine (150) in entgegengesetzten Richtungen erhöhen/verringern und das Zeichen der Korrekturgröße (Ph) negativ ist, die Betriebseinrichtung (170) die Dieselmaschine (150) stoppt.

11. Steuerungsvorrichtung nach einem der Ansprüche 5 bis 10, **dadurch gekennzeichnet, dass** der Modifikationskoeffizient ($\alpha$), wenn der Betriebswirkungsgrad der Dieselmaschine (150) in dem höchsten Bereich (A1) ist, als ein Referenzwert eingestellt ist, wobei der Modifikationskoeffizient ($\alpha$) erhöht wird, wenn der Betriebswirkungsgrad der Dieselmaschine (150) sich weiter von dem Bereich (A1) entfernt.

12. Steuerungsvorrichtung nach Anspruch 2 oder 3, **dadurch gekennzeichnet, dass** die Korrektureinrichtung (180, S30 - S95; S150 - S195) weiterhin eine Anforderungsgrößenbestimmungseinrichtung (S30) zur Bestimmung der ersten erforderlichen Größe (Pe) entsprechend der Dieselmaschine (150) auf der Grundlage der Korrekturgröße (Ph) vor einer Modifikation aufweist,
die Korrektureinrichtung (180, S30 - S95, S150 - S195) bestimmt, ob die erste erforderliche Größe (Pe) innerhalb eines geeigneten Betriebsbereichs der Dieselmaschine (150) liegt, und
falls bestimmt wird, dass die erste erforderliche Größe (Pe) sich außerhalb des geeigneten Betriebsbereichs befindet, die erste Einrichtung (180, S80, S180) die Korrekturgröße (Ph) modifiziert.

13. Steuerungsvorrichtung nach Anspruch 12, **dadurch gekennzeichnet, dass**, falls bestimmt wird, dass die erste erforderliche Größe (Pe) sich innerhalb des geeigneten Betriebsbereichs befindet, die Betriebseinrichtung (170) die Dieselmaschine (150) auf der Grundlage der ersten erforderlichen Größe (Pe) betreibt.

14. Steuerungsvorrichtung nach Anspruch 13, **dadurch gekennzeichnet, dass**, falls bestimmt wird, dass die erste erforderliche Größe (Pe) sich innerhalb des geeigneten Betriebsbereichs befindet, die erste Einrichtung (180, S80; S180) die Korrekturgröße (Ph) nicht modifiziert.

15. Steuerungsvorrichtung nach Anspruch 12 bis 14, **dadurch gekennzeichnet, dass** die Korrektureinrichtung (180, S30 - S95; S150 - S195) auf der Grundlage des Betriebszustands und des Betriebswirkungsgrads der Dieselmaschine (150) bestimmt, ob die erste erforderliche Größe (Pe) erhöht oder verringert werden sollte, und,
falls die bestimmte Erhöhungs-/Verringerungsrichtung dieselbe wie die Erhöhungs-/Verringerungsrichtung des Ausgangs ist, der auf der Grundlage der Korrekturgröße (Ph) bestimmt wird, die erste Einrichtung (180, S80; S180) die Höhe der Korrekturgröße (Ph) erhöht.

16. Steuerungsvorrichtung nach einem der Ansprüche 12 bis 15, **dadurch gekennzeichnet, dass** die Korrektureinrichtung (180, S30 - S95; S150 - S195) auf der Grundlage des Betriebszustands und des Betriebswirkungsgrads der Dieselmaschine (150) bestimmt, ob die erste erforderliche Größe (Pe) erhöht oder verringert werden sollte, und, falls bestimmt wird, dass die erste erforderliche Größe (Pe) verringert werden sollte und die Korrektur der ersten erforderlichen Größe (Pe) auf der Grundlage der Korrekturgröße (Ph) eine Korrektur zum Erhöhen ist, die erste Einrichtung (180, S80; S180) die Korrekturgröße (Ph) nicht modifiziert.

17. Steuerungsvorrichtung nach einem der Ansprüche 12 bis 16, **dadurch gekennzeichnet, dass** die Korrektureinrichtung (180, S30 - S95; S150 - S195) auf der Grundlage des Betriebszustands und des Betriebswirkungsgrads der Dieselmaschine (150) bestimmt, ob die erste erforderliche Größe (Pe) erhöht oder verringert werden sollte, und, falls auf der Grundlage der Korrekturgröße (Ph) bestimmt wird, dass die erste erforderliche Größe (Pe) erhöht werden sollte und die Korrektur der erforderlichen Größe (Pe) eine Korrektur zum Verringern ist, die Betriebseinrichtung (170) die Dieselmaschine (150) stoppt.

18. Steuerungsvorrichtung nach einem der Ansprüche 12 bis 15 und 17, **dadurch gekennzeichnet, dass** die Korrektureinrichtung (180, S30 - S95; S150 - S195) auf der Grundlage des Betriebszustands und des Betriebswirkungsgrads der Dieselmaschine (150) bestimmt, ob die erste erforderliche Größe (Pe) erhöht oder verringert werden sollte, und, falls bestimmt wird, dass die erste erforderliche Größe (Pe) verringert werden sollte und die Korrektur der ersten erforderlichen Größe (Pe) auf der Grundlage der Korrekturgröße (Ph) eine Korrektur zur Erhöhung ist, die Korrektureinrichtung (S180, S30 - S95; S150 - S195) die Korrekturgröße (Ph) derart modifiziert, dass die Ladegröße der elektrischen Energiespeichervorrichtung (194) innerhalb einer vorbestimmten Zeit in einen vorbestimmten Bereich gelangt.

19. Steuerungsvorrichtung nach einem der Ansprüche 12 bis 16 und 18, **dadurch gekennzeichnet, dass** die Korrektureinrichtung (180, S30 - S95; S150 - S195) auf der Grundlage des Betriebszustands und des Betriebswirkungsgrads der Dieselmaschine (150) bestimmt, ob die erste erforderliche Größe (Pe) erhöht oder verringert werden sollte, und falls bestimmt wird, dass die erste erforderliche Größe (Pe) erhöht werden sollte und die Korrektur der ersten erforderlichen Größe (Pe) auf der Grundlage der Korrekturgröße (Ph) eine Korrektur zur Verringerung ist, die Korrektureinrichtung (180, S30 - S95; S150 - S195) die Korrekturgröße (Ph) derart modifiziert, dass die Ladegröße der elektrischen Energiespeichervorrichtung (194) innerhalb einer vorbestimmten Zeit in einen vorbestimmten Bereich gelangt.

20. Steuerungsvorrichtung eines Dieselhybridfahrzeugs nach einem der Ansprüche 1 bis 19, **dadurch gekennzeichnet, dass** die elektrische Energiespeichervorrichtung (194) eine Batterie ist.

21. Steuerungsverfahren eines Dieselhybridfahrzeugs mit einer Dieselmaschine (150), Motoren/Generatoren (MG1, MG2) zum selektiven Erzeugen einer Antriebskraft oder Erzeugen eines Ladestroms, und einer elektrischen Energiespeichervorrichtung (194), die als eine elektrische Leistungszufuhrquelle für die Motoren (MG1, MG2) agiert, die durch diese geladen wird, wenn diese den Ladestrom erzeugen, **dadurch gekennzeichnet, dass**
eine Korrekturgröße (Ph) in Bezug auf den Ausgang der Dieselmaschine (150) auf der Grundlage des Ladezustands (SOC) der elektrischen Energiespeichervorrichtung (194) bestimmt wird, und
die Korrekturgröße (Ph) derart modifiziert wird, dass der Betriebswirkungsgrad der Dieselmaschine (150) entsprechend der Beziehung zwischen dem Betriebszustand und dem Betriebswirkungsgrad der Dieselmaschine (150) erhöht wird, um den Ausgang der Dieselmaschine (150) zu korrigieren.

**Revendications**

1. Dispositif de régulation d'un véhicule diesel hybride ayant un moteur diesel (150), des moteurs/générateurs (MG1, MG2) destinés à engendrer sélectivement une force motrice ou à engendrer un courant de charge, et un dispositif (194) de stockage d'énergie électrique, agissant comme une source d'alimentation électrique pour les moteurs (MG1, MG2), qui est chargée par ceux-ci lorsque ceux-ci engendrent le courant de charge, **caractérisé en ce qu'**il comprend :

un moyen (180, S20) de détermination de montant de correction destiné à déterminer un montant (Ph) de correction relatif à une sortie du moteur diesel (150) en se basant sur un état (SOC) de charge du dispositif (194) de stockage d'énergie électrique ; et
un moyen (180, S30 à S95 ; S150 à S195) de correction destiné à corriger la sortie (Pe) du moteur diesel (150) en modifiant le montant (Ph) de correction de façon à accroître le rendement de fonctionnement du moteur diesel (150) en fonction d'une relation entre un état de fonctionnement et le rendement de fonctionnement du moteur diesel (150).

2. Dispositif de régulation selon la revendication 1, **caractérisé en ce que** le moyen (180, S30 à S95 ; S150 à S195) de correction inclut un premier moyen (180, S80, S180) destiné à modifier le montant (Ph) de correction de façon que le rendement de fonctionnement du moteur diesel (150) soit accru selon la relation entre l'état de fonctionnement et le rendement de fonctionnement du moteur diesel (150) et un second moyen (180, S95) destiné à corriger le premier montant requis (Pe) relatif au moteur diesel (150) en utilisant le montant modifié (Pα) de correction et en déterminant un deuxième montant requis (Pe) relatif à la sortie du moteur diesel (150),
le dispositif de régulation comprenant en outre un moyen (170) de mise en oeuvre destiné à mettre en oeuvre le moteur diesel en utilisant la sortie du moteur diesel (150) correspondant au deuxième montant requis (Pe).

3. Dispositif de régulation selon la revendication 1 ou 2, **caractérisé en ce que** la sortie du moteur diesel (150) avant correction basée sur le montant (Ph) de correction est déterminée en se basant sur un troisième montant requis (Pd, Pa), requis par une unité d'entraînement à laquelle la force motrice est transmise et par les machines auxiliaires, et
**en ce que** le premier montant requis (Pe) inclut le montant (Ph) de correction et les troisièmes montants requis (Pd, Pa).

4. Dispositif de régulation selon l'une quelconque des revendications 1 à 3, **caractérisé en ce que**, lorsqu'une première correction de la sortie du moteur diesel (150) basée sur le montant (Ph) de correction en fonction de l'état (SOC) de charge du dispositif (194) de stockage d'énergie électrique et une seconde correction de la sortie du moteur diesel (150) basée sur la relation entre l'état de fonctionnement et le rendement de fonctionnement augmentent/ diminuent la sortie du moteur diesel (150) dans le même sens, le premier moyen (180, 580, S180) modifie le montant (Ph) de correction.

5. Dispositif de régulation selon la revendication 4, **caractérisé en ce que** le moyen (180, S30 à S95 ; S150 à S195) de correction comporte un moyen de mémorisation destiné à mémoriser préalablement un coefficient (α) de modification relatif au montant (Ph) de correction,
détermine s'il est nécessaire de multiplier le montant (Ph) de correction par le coefficient (α) de modification en se basant sur le signe du montant (Ph) de correction et sur la relation entre le premier montant requis (Pe) et le rendement de fonctionnement, et
s'il est déterminé que la multiplication du montant (Ph) de correction par le coefficient (α) de modification est nécessaire, multiplie le montant (Ph) de correction par le coefficient (α) de modification de façon à modifier le montant (Ph) de correction.

6. Dispositif de régulation selon la revendication 5, **caractérisé en ce que**, lorsque la première correction et la seconde correction augmentent/diminuent la sortie du moteur diesel (150) dans le même sens, le premier moyen (180, S80 ; S180) multiplie le montant (Ph) de correction par le coefficient (α) de modification qui est plus grand que 1 de façon à modifier le montant (Ph) de correction.

7. Dispositif de régulation selon l'une quelconque des revendications 4 à 6, **caractérisé en ce que**, lorsque la première correction et la seconde correction augmentent/diminuent la sortie du moteur diesel (150) en sens contraires, le moyen (180, S30 à S95 ; S150 à S195) de correction modifie le montant (Ph) de correction de façon que le montant de charge du dispositif (194) de stockage d'énergie électrique entre dans une plage prédéterminée à l'intérieur d'un temps prédéterminé.

8. Dispositif de régulation selon l'une quelconque des revendications 4 à 6, **caractérisé en ce que**, lorsque la première correction et la seconde correction augmentent/diminuent la sortie du moteur diesel (150) en sens contraires, le moyen (170) de mise en oeuvre met en oeuvre le moteur diesel (150) en utilisant la sortie du moteur diesel (150) basé sur le premier montant requis (Pe).

9. Dispositif de régulation selon l'une quelconque des revendications 4 à 8, **caractérisé en ce que**, lorsque la première correction et la seconde correction augmentent/diminuent la sortie du moteur diesel (150) en sens contraires et que le signe du montant (Ph) de correction est positif, le moyen (180, S30 à S95 ; S150 à S195) de correction ne corrige pas le montant (Ph) de correction.

10. Dispositif de régulation selon l'une quelconque des revendications 4 à 9, **caractérisé en ce que**, lorsque la première correction et la seconde correction augmentent/diminuent la sortie du moteur diesel (150) en sens contraires et que le signe du montant (Ph) de correction est négatif, le moyen (170) de mise en oeuvre arrête le moteur diesel (150).

11. Dispositif de régulation selon l'une quelconque des revendications 5 à 10, **caractérisé en ce que** le coefficient (α) de modification, lorsque le rendement de fonctionnement du moteur diesel (150) est dans la plage (A1) la plus haute, est pris comme valeur de référence, le coefficient (α) de modification étant accru à mesure que le rendement de fonctionnement du moteur diesel (150) devient plus éloigné de la plage (A1).

12. Dispositif de régulation selon la revendication 2 ou 3, **caractérisé en ce que** le moyen (180, S30 à S95 ; S150 à S195) de correction comprend en outre un moyen (S30) de détermination de montant requis destiné à déterminer le premier montant requis (Pe) correspondant au moteur diesel (150) en se basant sur le montant (Ph) de correction avant modification,
**en ce que** le moyen (180, S30 à S95 ; S150 à S195) de correction détermine si le premier montant requis (Pe) est à l'intérieur d'une région appropriée de fonctionnement du moteur diesel (150), et
**en ce que**, s'il est déterminé que le premier montant requis (Pe) est hors de la région appropriée de fonctionnement, le premier moyen (180, S80, S180) modifie le montant (Ph) de correction.

13. Dispositif de régulation selon la revendication 12, **caractérisé en ce que**, s'il est déterminé que le premier montant requis (Pe) est à l'intérieur de la région appropriée de fonctionnement, le moyen (170) de mise en oeuvre met en oeuvre le moteur diesel (150) en se basant sur le premier montant requis (Pe).

**14.** Dispositif de régulation selon la revendication 13, **caractérisé en ce que**, s'il est déterminé que le premier montant requis (Pe) est à l'intérieur de la région appropriée de fonctionnement, le premier moyen (180, S80 ; S180) ne modifie pas le montant (Ph) de correction.

**15.** Dispositif de régulation selon la revendication 12 à 14, **caractérisé en ce que** le moyen (180, S30 à S95 ; S150 à S195) de correction détermine si le premier montant requis (Pe) doit être augmenté ou diminué en se basant sur l'état de fonctionnement et le rendement de fonctionnement du moteur diesel (150), et
**en ce que**, si le sens déterminé d'augmentation/de diminution est le même que le sens d'augmentation/de diminution de la sortie déterminée en se basant sur le montant (Ph) de correction, le premier moyen (180, S80 ; S180) augmente l'amplitude du montant (Ph) de correction.

**16.** Dispositif de régulation selon l'une quelconque des revendications 12 à 15, **caractérisé en ce que** le moyen (180, S30 à S95 ; S150 à S195) de correction détermine si le premier montant requis (Pe) doit être augmenté ou diminué en se basant sur l'état de fonctionnement et le rendement de fonctionnement du moteur diesel (150), et
**en ce que**, s'il est déterminé que le premier montant requis (Pe) doit être diminué et si la correction du premier montant requis (Pe) basée sur le montant (Ph) de correction est une correction pour augmentation, le premier moyen (180, S80 ; S180) ne modifie pas le montant (Ph) de correction.

**17.** Dispositif de régulation selon l'une quelconque des revendications 12 à 16, **caractérisé en ce que** le moyen (180, S30 à S95 ; S150 à S195) de correction détermine si le premier montant requis (Pe) doit être augmenté ou diminué en se basant sur l'état de fonctionnement et le rendement de fonctionnement du moteur diesel (150), et
**en ce que**, s'il est déterminé que le premier montant requis (Pe) doit être augmenté et si la correction du premier montant requis (Pe) basée sur le montant (Ph) de correction est une correction pour diminution, le moyen (170) de mise en oeuvre arrête le moteur diesel (150).

**18.** Dispositif de régulation selon l'une quelconque des revendications 12 à 15 et 17, **caractérisé en ce que** le moyen (180, S30 à S95 ; S150 à S195) de correction détermine si le premier montant requis (Pe) doit être augmenté ou diminué en se basant sur l'état de fonctionnement et le rendement de fonctionnement du moteur diesel (150), et
**en ce que**, s'il est déterminé que le premier montant requis (Pe) doit être diminué et si la correction du premier montant requis (Pe) basée sur le montant (Ph) de correction est une correction pour augmentation, le moyen (180, S30 à S95 ; S150 à S195) de correction modifie le montant (Ph) de correction de sorte que le montant de charge du dispositif (194) de stockage d'énergie électrique entre dans une plage prédéterminée à l'intérieur d'un temps prédéterminé.

**19.** Dispositif de régulation selon l'une quelconque des revendications 12 à 16 et 18, **caractérisé en ce que** le moyen (180, S30 à S95 ; S150 à S195) de correction détermine si le premier montant requis (Pe) doit être augmenté ou diminué en se basant sur l'état de fonctionnement et le rendement de fonctionnement du moteur diesel (150), et
**en ce que**, s'il est déterminé que le premier montant requis (Pe) doit être augmenté et si la correction du premier montant requis (Pe) basée sur le montant (Ph) de correction est une correction pour diminution, le moyen (180, S30 à S95 ; S150 à S195) de correction modifie le montant (Ph) de correction de sorte que le montant de charge du dispositif (194) de stockage d'énergie électrique entre dans une plage prédéterminée à l'intérieur d'un temps prédéterminé.

**20.** Dispositif de régulation d'un véhicule diesel hybride selon l'une quelconque des revendications 1 à 19, **caractérisé en ce que** le dispositif (194) de stockage d'énergie électrique est une batterie.

**21.** Procédé de régulation d'un véhicule diesel hybride ayant un moteur diesel (150), des moteurs/générateurs (MG1, MG2) destinés à engendrer sélectivement une force motrice ou à engendrer un courant de charge, et un dispositif (194) de stockage d'énergie électrique, agissant comme une source d'alimentation électrique pour les moteurs (MG1, MG2), qui est chargée par ceux-ci lorsque ceux-ci engendrent le courant de charge, **caractérisé :**

**en ce que** l'on détermine un montant (Ph) de correction relatif à une sortie du moteur diesel (150) en se basant sur l'état (SOC) de charge du dispositif (194) de stockage d'énergie électrique ; et
**en ce que** l'on modifie le montant (Ph) de correction de façon à accroître le rendement de fonctionnement du moteur diesel (150) en fonction de la relation entre l'état de fonctionnement et le rendement de fonctionnement du moteur diesel (150) de façon à corriger la sortie du moteur diesel (150).

# F I G. 1

# FIG. 2

# F I G. 3

EQUIVALENT
ENERGY LIME
Pe=TXNe

T
TORQUE
(Nm)

A1
A2
A3
LG
Q1
Q2

ENGINE REVOLUTION
NUMBER (rpm)
Ne

# FIG. 4

OPERATING CONTROL PROCESSING

S10 — READ SOC

S20 — SET CORRECTION AMOUNT Ph ← CORRECTION AMOUNT MAP

S30 — READ ENGINE OUTPUT Pe

S40 — SET MODIFICATION COEFFICIENT $\alpha$ ← MODIFICATION COEFFICIENT MAP

S50

IS Pe WITHIN RANGE A1 ?

WITHIN RANGE A1

SMALLER THAN A1

LARGER THAN A1

NO

S70

Ph < 0 ?

YES

S75

Ph > 0 ? NO

YES

S60 — P$\alpha$←Ph

S80

P$\alpha$←Ph × $\alpha$

S85 — Pe←0

S90

CHECKING MAXIMUM/MINIMUM VALUES, GUARDING PROCESSING

S95

EXECUTE CORRECTION

END

# F I G. 5

SMALL ←——— SOC ———→ LARGE

# F I G. 6

SMALL ←——— ENGINE ———→ LARGE
OUTPUT
Pe

# F I G. 7

```
        ┌─────────────────────────────────┐
        │ OPERATING CONTROL PROCESSING    │
        └─────────────────────────────────┘
```

S150

IS Pe WITHIN RANGE A1 ?

WITHIN RANGE A1

SMALLER THAN A1

LARGER THAN A1

S170    Ph ≦ 0 ?

S175    Ph ≧ 0 ?

NO    YES    YES    NO

S200
SET MAXIMUM Pα SUCH THAT SOC ENTERS A PREDETERMINED RANGE WITHIN A PREDETERMINED TIME.

S180
Pα ← Ph × α

S210
SET MINIMUM Pα SUCH THAT SOC ENTERS A PREDETERMINED RANGE WITHIN A PREDETERMINED TIME.

Pα ← Ph    S160

S190
CHECKING MAXIMUM/MINIMUM VALUES, GUARDING PROCESSING

S195
EXECUTE CORRECTION

END

# F I G. 8

SOC

Ph>0 AND Pα←Ph× α(S80 IN FIG. 4)

Pα←Ph(S60 IN FIG. 4)

S1+△S

S1

S1−△S

} TARGET SOC RANGE

B1

Pα←MAXIMUM Pα
(S200 IN FIG. 7)

TIME t

# FIG. 9

252 — STARTER

150

270 — EFIECU

DIESEL ENGINE

MANUAL TRANSMISSION

280 — CONTROL ECU

290

291 — INVERTER

MG11

294 — BATTERY

114

116L    116R

**EP 1 288 051 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6164400 A
- US 5343970 A
- DE 4344053 A1
- US 6301529 B1